# EUROPÄISCHE PATENTANMELDUNG

(11) **EP 3 098 476 A1**
(43) Veröffentlichungstag der Anmeldung: **30.11.2016**
(21) Anmeldenummer: 15169470.0
(22) Anmeldetag: 27.05.2015
(51) Int. Cl.: F16F 15/315, G01M 17/10

(54) **ELASTISCHES LAGER**

(71) Anmelder: Prisma Engineering Maschinen- und Motorentechnik GmbH, 8041 Graz (AT)
(72) Erfinder: Gschweitl, Ernst, 8200 Gleisdorf (AT)
(74) Vertreter: Grättinger Möhring von Poschinger Patentanwälte Partnerschaft

(57) **Zusammenfassung**

Resonanzprüfstand zur Belastungsprüfung rotatorischer Prüflinge, insbesondere zur Verprobung des Schwingungszustands von Radsätzen (2) für Schienenfahrzeuge, wobei ein Radsatz aus einer Radachse (3) mit zwei Rädern (4) gebildet und auf einem Maschinentisch (1) feststehend abgestützt ist und wobei die Räder (4) des Radsatzes jeweils fest, entweder mit ihrer Innenseite oder ihrer Außenseite mit einem Adapter (6) verbunden sind, der eine Schwungscheibe (9) aufweist, die auf der Radachse (3) mit Entfernung vom zugeordneten Rad über ein Lager (30) abgestützt ist, welches elastische Eigenschaften besitzt.

## Beschreibung

Die Erfindung betrifft ein elastisches Lager zur Verprobung der Umlaufbiegung eines rotatorischen Prüflings auf einem Resonanzprüfstand.

Ferner betrifft sie einen entsprechenden Resonanzprüfstand, insbesondere zur Verprobung des Schwingungszustands von Radsätzen für Schienenfahrzeuge.

Dabei handelt es sich um solche Radsätze, deren Radachse beidseits über die Räder des Radsatzes hinaus verlängert ist und mit einem Wellenzapfen endet (Radsatz 1. Art) oder solche, bei welchen sich die Lagerung des Radsatzes innerhalb der beiden Räder befindet (Radsatz 2. Art). An einem Schienenfahrzeug sind dementsprechend die Radachsen entweder auf den Wellenzapfen (Radsatz 1. Art) oder auf der Welle zwischen den Rädern (Radsatz 2. Art) gelagert.

Bei einer Vorrichtung zur Belastungsprüfung rotatorischer Prüflinge in Form von Radsätzen (1. Art) für Schienenfahrzeuge wurde bereits vorgeschlagen, die von Aktuatoren erzeugte Erregerschwingung mittels Koppelstäben auf den jeweiligen Prüfling zu übertragen, wobei der Prüfling selbst feststehend auf einem Maschinentisch abgestützt ist. Diese Vorrichtung ist in der Europäischen Patentanmeldung EP 14001257 beschrieben, deren Gegenstand insoweit auch zum Gegenstand vorliegender Patentanmeldung erklärt wird.

Nach dem älteren Vorschlag (vergleiche dort insbesondere Figuren 1, 6 und 7) sind ein derartiger Prüfstand (Fig. 1) mit einem Radsatz (1. Art) als Prüfling (Fig. 6) und ein Biegemomentenverlauf gemäß Verprobung seines Schwingungszustands (Fig. 7) beschrieben.

Bei einer derartigen Prüfstandanordnung für Radsätze (1. Art) sitzen auf den Wellenzapfen Adaptoren, die mit ihrem Befestigungsflansch auf der Außenseite des zugeordneten Rads zentrisch befestigt sind. Auf seiner dem Rad abgewandten Seite besitzt jeder Adapter eine Schwungscheibe. Die von einem Aktuator des Prüfstands erzeugte Schwingung wird in den stehenden Radsatz über horizontale Koppelstäbe in den zugeordneten Adapter eingeleitet. Die Enden der Koppelstäbe sind dort zwischen Befestigungsflansch und Schwungscheibe in Art einer mechanischen Einspannung spielfrei befestigt.

Vertikale Koppelstäbe dienen der Verprobung der Torsionsbelastung des Radsatzes. Sie sind in gleicher Weise am Adapter befestigt und dienen überdies als vertikale Lagerung des Radsatzes auf dem Maschinentisch.

Sowohl die horizontalen Koppelstäbe als auch die vertikalen Koppelstäbe sind am Adapter bevorzugt im Bereich seiner Querschnittsebene befestigt, welche durch den Verformungsnullpunkt der schwingenden Radachse verläuft. Durch Auswahl dieser Querschnittsebene des dynamischen Nullpunkts kann der Verlauf der Umlaufbiegung eines Prüflings über dessen gesamte Länge verprobt werden. Anders als bei der sogenannten Zwei-Punkt-Biegung verläuft die Umlaufbiegung bei Radsätzen mit seitlichen Wellenzapfen und Adaptoren als sogenannte Vier-Punkt-Biegung, wobei sich der Biegemomentenverlauf über die gesamte Länge der Radachse einschließlich der Wellenzapfen erstreckt. Er kommt somit der realen Belastung des Schienenfahrzeugs mit Radsätzen 1. Art, also Radsätzen mit Außenlagerung der Räder, besonders nahe.

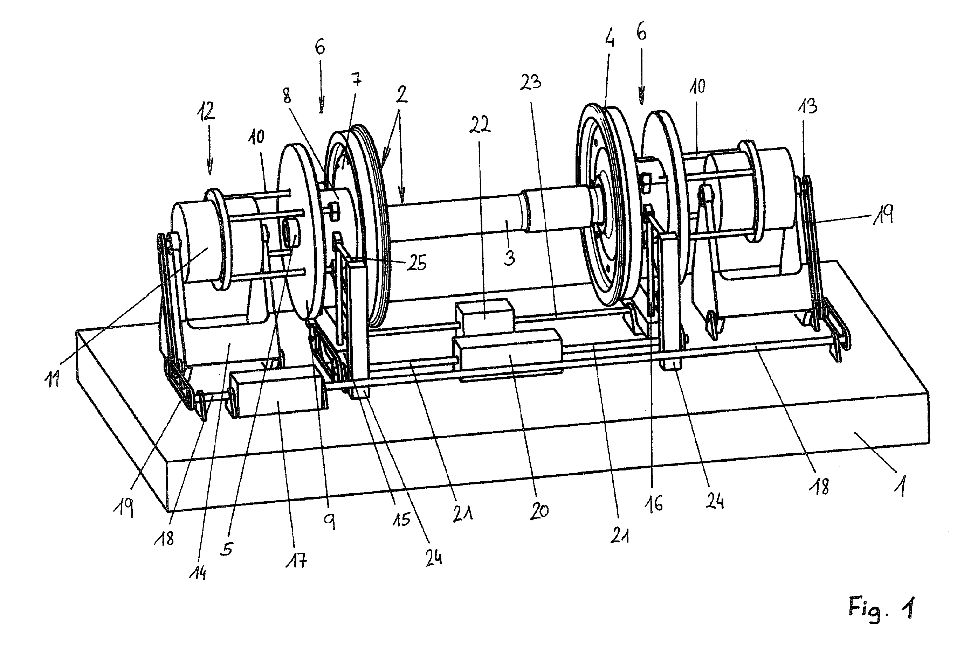

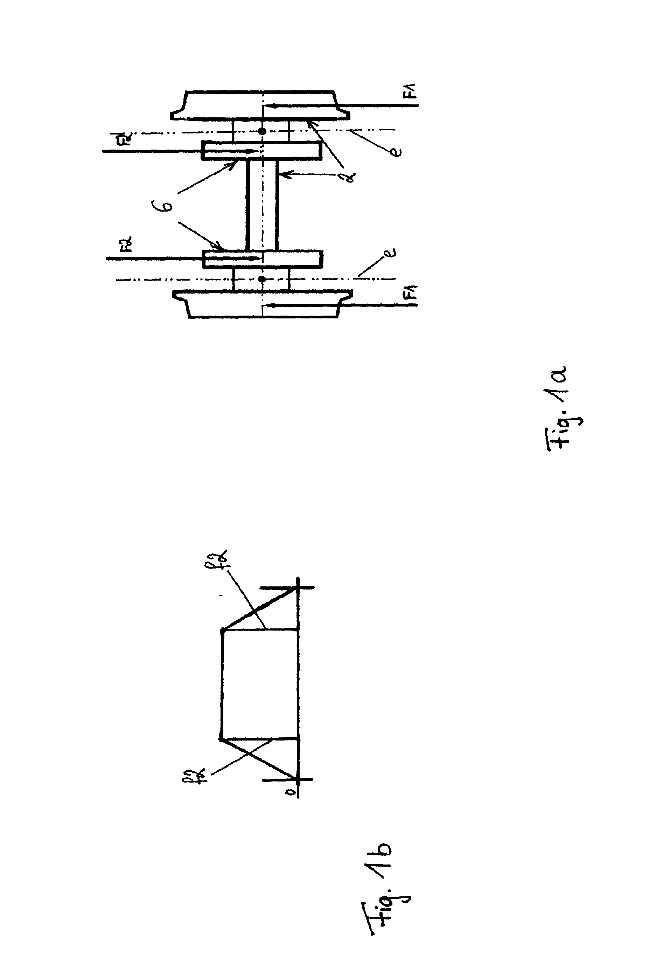

Bei Schienenfahrzeugen mit Radsätzen 2. Art, also Radsätzen mit Innenlagerung der Räder, liegen grundsätzlich vergleichbare Verhältnisse vor, wie in der folgenden Beschreibung (zu den Figuren 1a und 1b) veranschaulicht wird.

Bei Resonanzprüfständen zur Verprobung der Vier-Punkt-Biegung hat sich gezeigt, dass bei Verwendung üblicher Lagerbuchsen in den Lagerstellen auf der Radachse ein relativ hoher Verschleiß sowohl auf Seiten des Lagers als auch auf Seiten der Radachse hinzunehmen ist, d. h. die Lagerbuchsen, welche drehfest auf der Radachse sitzen sind durch die auftretenden Schwingungskräfte rasch abgenutzt und müssen ausgetauscht werden.

Demgegenüber liegt der vorliegenden Erfindung die Aufgabe zugrunde, ein Lager zu schaffen, welches unter den bei Verprobung der Umlaufbiegung auftretenden hohen Schwingungsbelastungen weitgehend verschleißfrei ist und welches darüber hinaus über die gesamte Länge der Radachse einen den realen Belastungen nahekommenden Biegemomentenverlauf gewährleistet.

Erfindungsgemäß wird diese Aufgabe an einem Resonanzprüfstand gemäß dem Oberbegriff von Patentanspruch 1 dadurch gelöst, dass die Räder des Radsatzes jeweils fest, entweder mit ihrer Innenseite oder ihrer Außenseite mit einem Adapter verbunden sind, der eine Schwungscheibe aufweist, die auf der Radachse mit Entfernung vom zugeordneten Rad über ein Lager abgestützt ist, welches elastische Eigenschaften besitzt.

Besonders vorteilhaft ist, dass das in der Schwungscheibe sitzende elastische Lager in radialer Richtung steif, im übrigen elastisch verformbar ausgebildet ist.

Ein derartiges elastisches Lager erfüllt einerseits die Anforderung, auf dem Prüfstand hohe Lagerlasten aufnehmen zu können und gewährleistet andererseits die Aufnahme von Mikrobewegungen der Radachse bei deren Verformung in Umfangsrichtung und auch in axialer Richtung. Mit dem erfindungsgemäßen elastischen Lager kommt das Verprobungsergebnis den realen Bedingungen eines Schienenfahrzeugs nahe, bei welchem der Radsatz auf Wälzlagern im Bereich der Wellenzapfen (Radsatz 1. Art) bzw. bei welchem der Radsatz zwischen den Rädern (Radsatz 2. Art) gelagert ist.

Eine vorteilhafte Ausführungsform des Erfindungsgegenstands besteht darin, dass das elastische Lager aus einzelnen Federspeichen zusammengesetzt ist, deren radial inneren Enden eine kreisförmig geschlossene Lagerschale bilden und deren radial äußeren Enden mit der Schwungscheibe fest verbunden sind.

Ein derartiges Lager ist weitgehend verschleißfrei, weil die einzeln befestigten Federspeichen mit ihren freien Enden die Biegung der Radachse mitmachen können, indem sie quasi verschleißfrei entsprechend der Mikroverformung der Federspeichen mitgenommen werden. Dies gilt sowohl für eine Biegeverformung der Federspeichen in Umfangsrichtung als auch in axialer Richtung.

Eine besonders vorteilhafte Befestigung der Federspeichen in der Schwungscheibe besteht darin, dass die radial äußeren Enden der Federspeichen jeweils eine Verbreiterung in Umfangsrichtung bilden, mit welcher sie in einer Ringnut der Schwungscheibe mit Abstand voneinander befestigt sind.

Dabei kann es sich um einen relativ engen Abstand, z. B. einen Schnittabstand, wie er bei der Fertigung der einzelnen Federspeichen aus einem scheibenförmigen Rohling entsteht, handeln.

Die Federspeichen sind vorteilhaft mit ihren Verbreiterungen in der Ringnut mittels eines Keilrings befestigt. Die inneren Enden können dabei entweder als ebene Flächen oder bevorzugt als kegelförmige Keilflächen ausgebildet sein.

Was die bereits nach dem älteren Vorschlag verwirklichten Adaptoren betrifft, so können diese erfindungsgemäß jeweils in Umfangsrichtung ein oder mehrteilig ausgebildet sein, derart, dass sie die Radialkräfte des jeweils zugeordneten, in Schwingung versetzten Rads über die Schwungscheibe und die Federspeichen auf die Lagerstellen der Radachse übertragen. Dabei sind die Federspeichen in Folge ihrer Formgebung besonders gut geeignet, die auftretenden Mikrobewegungen der schwingenden Radachse aufzunehmen und weitgehend verschleißfrei auszugleichen.

Das erfindungsgemäße elastische Lager eignet sich somit generell zur Verprobung der Umlaufbiegung eines rotatorischen Prüflings, der hinsichtlich seiner Ausgestaltung von einem Radsatz abweicht, wobei dessen Gestalt wenigstens einen als Welle ausgebildeten Abschnitt umfasst. Ein derartiger Prüfling wird wie vorstehend beschrieben auf einen Maschinentisch eines Resonanzprüfstands abgestützt. Er besitzt ein elastisches Lager, welches wie vorstehend beschrieben aus einzelnen Federspeichen zusammengesetzt ist, die auf einem Kreisumfang verteilt in einer mit dem Prüfling fest verbundenen Schwungscheibe sitzen, wobei die radial inneren Enden der Federspeichen eine kreisförmig geschlossene Lagerschale bilden, in welcher der Prüfling aufgenommen ist und wobei die äußeren Enden der Federspeichen mit Abstand voneinander in der Schwungscheibe befestigt sind, derart, dass durch elastische Verformung der Federspeichen Schwingungskräfte auf den Prüfling übertragen und Mikrobewegungen des schwingenden Prüflings von den Federspeichen aufgenommen werden.

Die Schwungscheibe mit dem elastischen Lager kann entweder am Prüfling selbst oder einem anderen raumfesten Bauteil befestigt sein.

Bezüglich weiterer Ausgestaltungen des elastischen Lagers, zur Verprobung von rotatorischen Prüflingen die einem Radsatz insoweit ähneln, wird auf die Unteransprüche 11 bis 14 verwiesen.

Als geeignete Werkstoffe für das elastische Lager kommen bevorzugt hochfester Stahl mit einem E-Modul von beispielsweise 210.000 MPa oder eine Aluminiumlegierung mit deutlich niedrigerem E-Modul in Frage, wobei diese Werkstoffe unterschiedlichen realen Beanspruchungen zugeordnet werden können, abhängig von der Art und Belastung des Prüflings. Für einen Radsatz an einem Schienenfahrzeug, bei welchem der Radsatz zu 80% durch Geradeausfahrt belastet wird, liefert Stahl wegen seines höheren E-Moduls der Wirklichkeit näherkommende Verprobungswerte für die Umlaufbiegung. Hingegen entsprechen Aluminiumlegierungen, mit E-Modulen in der Größenordnung von etwa 30% von Stahl, etwa den realen Verhältnissen bei einem Radsatz von Schienenfahrzeugen in extremer Bogenfahrt.

Im Folgenden wird ein Ausführungsbeispiel der Erfindung anhand der Zeichnung erläutert. Es zeigen
- Fig. 1: die Ansicht eines Resonanzprüfstands gemäß dem eingangs genannten älteren Vorschlags (EP 14001257, dort Fig. 1),
- Fig. 1a: die Ansicht eines schematisch dargestellten Radsatzes (2. Art) mit Innenlagerung der Räder,
- Fig. 1b: den Biegemomentenverlauf zu Fig. 1a,

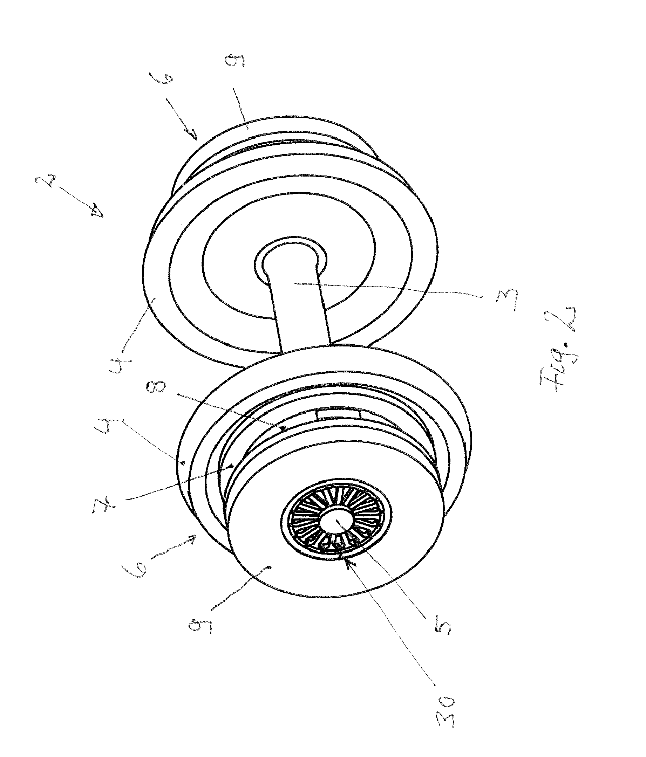

- Fig. 2: eine räumliche Darstellung eines kompletten Radsatzes (1. Art) mit eingebautem elastischen Lager,

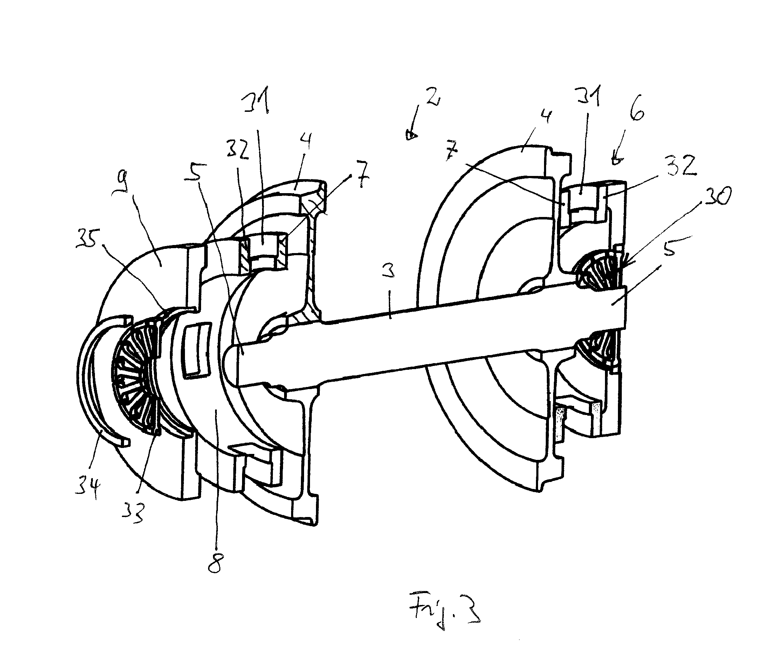

- Fig. 3: einen axialen Längsschnitt durch einen Radsatz gemäß Fig. 2, wobei die Bauteile des rechten Rads in axialer Richtung auseinandergezogen dargestellt sind,

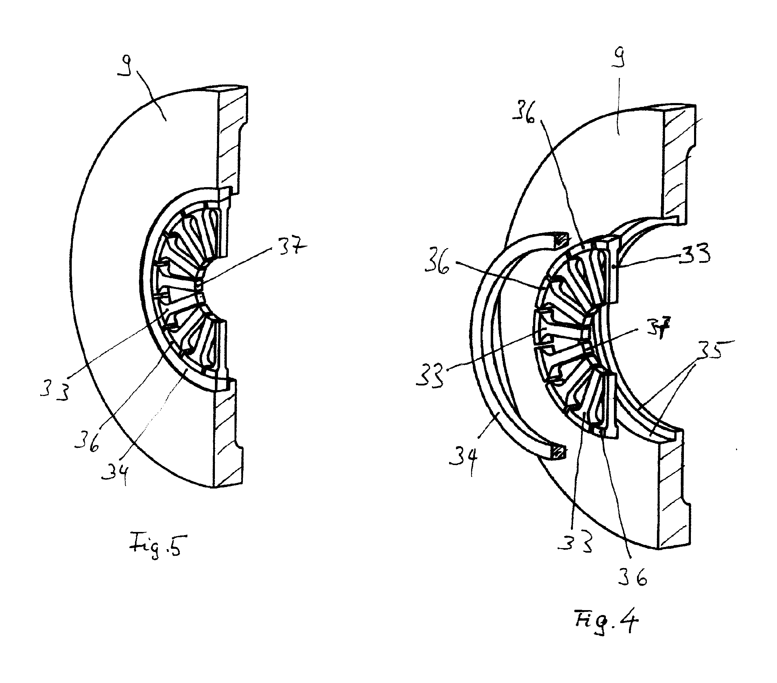

- Fig. 4: einen Halbschnitt durch das elastische Lager mit axial auseinandergezogener Darstellung seiner Bauteile,
- Fig. 5: den Halbschnitt gemäß Fig. 4 in montierter Darstellung,

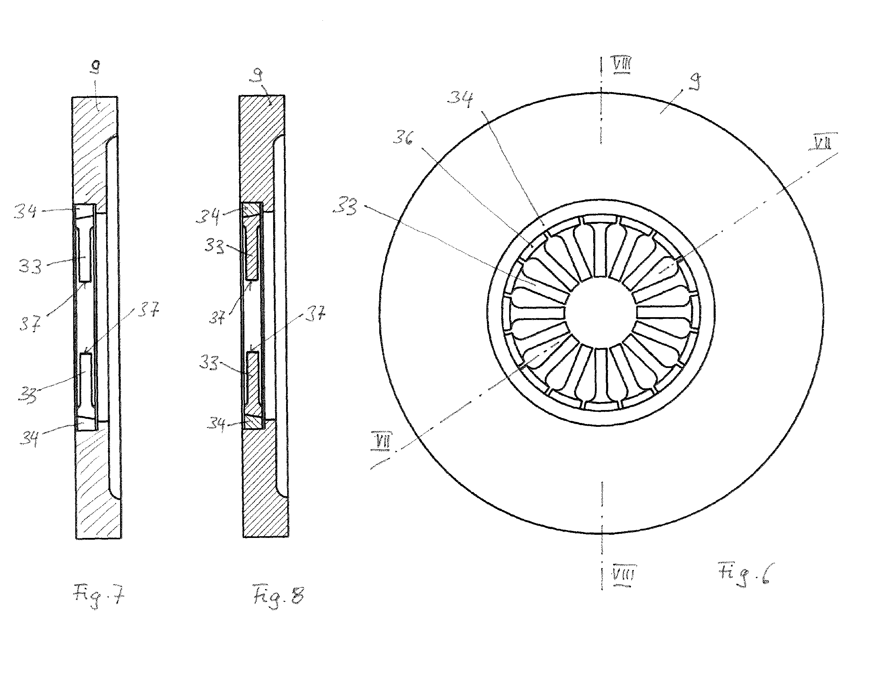

- Fig. 6: die Ansicht eines erfindungsgemäßen elastischen Lagers,
- Fig. 7: einen Schnitt gemäß VII-VII der Fig. 6,
- Fig. 8: einen Schnitt gemäß VIII-VIII der Fig. 6.

Figur 1 zeigt einen Resonanzprüfstand gemäß dem Gegenstand des eingangs genannten älteren Vorschlags (EP 14001257.6), auf dessen Maschinentisch 1 ein Radsatz 2 eines Schienenfahrzeugs aufgebaut ist. Der Radsatz 2 besteht aus einer Radachse 3, auf welcher zwei Räder 4 drehfest befestigt sind. Die Radachse 3 ist auf beiden Seiten über die Räder 4 hinaus durch Wellenzapfen verlängert.

Ein derartiger Radsatz wird im Folgenden als "Radsatz 1. Art" bezeichnet.

Bei bestimmten Schienenfahrzeugen fehlen derartige verlängerte Wellenzapfen 5 der Radachse 3 für die Radlager (im Folgenden als "Radsatz 2. Art" bezeichnet). Die Adaptoren 6 des Prüfstands sitzen hier an den Innenseiten der Räder 4, wie in Fig. 1a gezeigt. Die Krafteinleitung durch die Schwingungsbelastung erfolgt in die Räder 4 über die Kräfte F1 und in die Adaptoren 6 über die Kräfte F2. Fig. 1b zeigt den Biegemomentenverlauf als sogenannte 4-Punkt-Biegung zu Fig. 1a als Ergebnis der Verprobung unter Schwingungsbelastung des Radsatzes 2. Senkrecht zur Radachse verläuft die Nullpunktebene e der Schwingung innerhalb der Adaptoren 6.

Im Übrigen sind die Ausführungen zu den Figuren 2 bis 8, soweit sie den Radsatz 1. Art betreffen, analog auf den Radsatz 2. Art anwendbar, indem die Außenlagerung der Adaptoren 6 beim Radsatz 1. Art auf deren Innenlagerung beim Radsatz 2. Art übertragen wird.

Auf den verlängerten Wellenzapfen 5 von Radsätzen 1. Art sitzen wie in Fig. 1 gezeigt Adaptoren 6, welche jeweils mit ihrem Befestigungsflansch 7 auf den zugeordneten Außenseiten der Räder 4 zentrisch befestigt sind. Der Befestigungsflansch 7 ist radseitig mit einer Nabe 8 eines Adapters 6 verbunden, auf deren gegenüberliegenden Seite eine Schwungscheibe 9 vorgesehen ist. An der Nabe 8 des jeweiligen Adapters sind Koppelstäbe 10 angeschlossen, deren andere Enden mit dem Gehäuse 11 eines Aktuators 12 verbunden sind. Die Koppelstäbe dienen zur Übertragung einer der Biegebelastung des Radsatzes 2 entsprechenden umlaufenden Biegeschwingung. Die Koppelstäbe 10 erstrecken sich lose durch Bohrungen in der Schwungscheibe 9 hindurch und sind mit der Nabe 8 der Adaptoren 6 jeweils in Art einer mechanischen Einspannung spielfrei befestigt.

Das Gehäuse 11 eines Aktuators ist auf einer (nicht dargestellten) Erregerwelle begrenzt beweglich gelagert, so dass es deren Schwingungen mitmachen und über die Koppelstäbe 10 und den Adapter 6 auf den Radsatz übertragen kann. Eine Antriebsachse 13 zur Erregerwelle ist auf einem Lagerbock 14 gelagert, der auf dem Maschinentisch 1 abgestützt ist.

An der Nabe jedes Adapters sind ferner vertikale Koppelstäbe 16 angeschlossen, welche der Übertragung einer Erregerschwingung auf den Radsatz 2 zur Verprobung der Torsionsbelastung dienen. Auch die vertikalen Koppelstäbe 16 sind einerseits fest am Gehäuse zugeordneter Aktuatoren 15, andererseits an der Nabe 8 der Adaptoren in Art einer mechanischen Einspannung spielfrei befestigt.

Während die horizontalen Koppelstäbe 10 zur Übertragung der Erregerschwingung zur Verprobung der Biegebelastung des Radsatzes 2 dienen sind die vertikalen Koppelstäbe 16 für die Übertragung der Erregerschwingung zur Verprobung der Torsionsbelastung des Radsatzes 2 vorgesehen.

Die Befestigungspunkte der Koppelstäbe 10, 16 an der jeweiligen Nabe 8 der Adaptoren 6 befinden sich in deren Querschnittsebene, welche durch den Verformungsmittelpunkt der schwingenden Radachse verläuft. Durch Auswahl dieser Querschnittsebene des "dynamischen Nullpunkts" kann der Verlauf der Umlaufbiegung des zu verprobenden Radsatzes über dessen gesamte Länge ermittelt werden.

Die Antriebsachsen 13 der oberen Aktuatoren 12 werden durch einen Antrieb 17 in Rotation versetzt. Über eine Verbindungswelle 18 ist der Antrieb 17 mit dem gegenüberliegenden Aktuator 12 verbunden, so dass beide oberen Aktuatoren 12 jeweils über einen Riementrieb 19 synchron angetrieben werden.

Ein weiterer Antrieb 20 dient der Betätigung der unteren Aktuatoren 15 über eine gemeinsame Antriebswelle 21 für beide Aktuatoren. Die Aktuatoren 15 sind über ein Wendegetriebe 22 miteinander gekoppelt, welches über eine Wellenverbindung 23 die Erregerschwingung der unteren Aktuatoren 15 gegensinnig steuert, so dass die vertikalen Koppelstäbe 16 stets eine gegenläufige Kraft auf die Adaptoren 6 ausüben.

Zwei den Adaptoren 16 zugeordnete vertikale Lagerstützen 24 dienen der Aufnahme von Seitenkräften. Dazu sind die Lagerstützen 24 über horizontale Stützstäbe 25 an den Naben 8 der Adaptoren 6 abgestützt.

Wie in Fig. 1 nicht näher dargestellt sitzt auf dem jeweiligen Wellenzapfen 5 ein Adapter 6; er ist üblicherweise mit einer gewöhnlichen Lagerbuchse auf dem Wellenzapfen 5 gelagert (in Fig. 1 nicht gezeigt).

Gemäß den folgenden Figuren der Zeichnung wird am Beispiel eines Radsatzes 1. Art erläutert, wie eine derartige Lagerbuchse in besonders vorteilhafter Weise als elastisches Lager ausgebildet ist.

Figur 2 zeigt einen kompletten Radsatz 1. Art mit einem derartigen elastischen Lager 30 in perspektivischer Darstellung. Der eigentliche Radsatz 2, bestehend aus Radachse 3 und den Rädern 4, besitzt auf beiden Seiten Adaptoren 6, die mittels Befestigungsflanschen 7 an den Außenseiten der Räder 4 befestigt sind. Der Befestigungsflansch 7 ist über eine Nabe 8 fest mit einer Schwungscheibe 9 verbunden, die mittels eines elastischen Lagers 30 auf dem jeweiligen Wellenzapfen 5 des Radsatzes 2 abgestützt ist.

Figur 3 zeigt einen Längsschnitt durch den Radsatz 2 mit der Radachse 3, welche beidseitig mit im Durchmesser reduzierten Wellenzapfen 5 endet und mit welcher die Räder 4 des Schienenfahrzeugs drehfest verbunden sind. An den Außenseiten der Räder 4 sind die Adaptoren 6 befestigt, welche aus einem Profilring 31 und der Schwungscheibe 9 zusammengesetzt sind. Der Profilring 31 besitzt einen U-Profil-Querschnitt, dessen dem Rad 4 zugewandter Schenkel den Befestigungsflansch 7 zur festen Verbindung mit der Außenseite des Rads 4 bildet.

Der axial äußere Schenkel 32 des U-Profils ist fest mit der axial inneren Seite der Schwungscheibe 9 verbunden. Das rechte Rad zeigt die genannten Bauteile im Zusammenbau; die Bauteile des linken Rads sind zur Verdeutlichung in axialer Richtung auseinandergezogen dargestellt. Hier erkennt man, dass der Steg des Profilrings 31 eine Nabe 8 bildet, an welcher die zu Fig. 1 beschriebenen Koppelstäbe 10, 16 angeschlossen sind.

Das im Zentrum der Schwungscheibe sitzende elastische Lager 30 ist zusammengesetzt aus über den Umfang gleichmäßig verteilten Federspeichen 33 und einem Keilring 34, welcher der Befestigung der äußeren Enden der Federspeichen 33 in einer Ringnut 35 der Schwungscheibenbohrung der Schwungscheibe 9 dient.

Figur 4 zeigt die Schwungscheibe 9 im Halbschnitt mit Ringnut 35 in deren Inneren die axial ausgerückten Bauteile bestehend aus den Federspeichen 33 und dem Keilring 34 eingebaut sind, so wie in der Endmontage gemäß Fig. 5 dargestellt. Die Federspeichen 33 besitzen an ihren äußeren Enden Verbreiterungen 36, welche sich symmetrisch nach beiden Seiten erstrecken. Die Verbreiterungen 36 sind an ihrem Außenumfang leicht kegelig ausgebildet, so dass sie mittels des Keilrings 34 innerhalb der Ringnut 35 der Schwungscheibe 9 mit geringen Abständen in Umfangsrichtung zueinander montierbar sind. Die einzelnen Lagerflächen 37 an den inneren Enden der Federspeichen 33 bilden bei eingebauter Radachse eine geschlossene Lagerfläche für die Aufnahme der Wellenzapfen 5 der Radachse 3. Durch die gewählte Auflösung des Wellenzapfenlagers in einzelne Federspeichen entsteht ein elastisches Lager, welches gegen in radialer Richtung einwirkende Kräfte steif ist, welches sich aber an Verformungen der Schwungscheibe bzw. der Wellenzapfen unter Einwirkung der Resonanzschwingungen des Prüfstands sowohl in axialer Richtung als auch in Umfangsrichtung anpassen kann. Diese Anpassung erfolgt praktisch verschleißfrei, da die inneren Enden 37 der Federspeichen 33 durch die Reibungskräfte auf dem Umfang der Wellenzapfen 5 bei Vermeidung von Fretting mitgenommen werden, wobei sich die Federspeichen 33 entsprechend verbiegen. Die inneren Lagerflächen 37 der einzelnen Federspeichen 33 können entweder als ebene Flächen oder mit zylindrischer Wölbung ausgebildet sein, so dass sie zusammen eine geschlossene Lagerfläche verwirklichen, welche der Umfangsfläche der Wellenzapfen 5 besonders genau angepasst ist.

Die Figuren 6 bis 8 zeigen eine Ansicht auf die Schwungscheibe 9 mit dem elastischen Lager 30, umfassend den vorstehend beschriebenen Kranz aus Federspeichen 33 mit Verbreiterungen 36 zur Befestigung innerhalb der Ringnut 35 der Schwungscheibenbohrung mittels des Keilrings 34. Der weiteren Verdeutlichung dienen die beiden Diagonalschnitte VII-VII gemäß Fig. 7 sowie VIII-VIII gemäß Fig. 8.

## Patentansprüche

1. Resonanzprüfstand zur Belastungsprüfung rotatorischer Prüflinge, insbesondere zur Verprobung des Schwingungszustands von Radsätzen (2) für Schienenfahrzeuge, wobei ein Radsatz aus einer Radachse (3) mit zwei Rädern (4) gebildet und auf einem Maschinentisch (1) feststehend abgestützt ist
**dadurch gekennzeichnet,**
**dass** die Räder (4) des Radsatzes jeweils fest, entweder mit ihrer Innenseite oder ihrer Außenseite mit einem Adapter (6) verbunden sind, der eine Schwungscheibe (9) aufweist, die auf der Radachse (3) mit Entfernung vom zugeordneten Rad über ein Lager (30) abgestützt ist, welches elastische Eigenschaften besitzt.

2. Resonanzprüfstand nach Anspruch 1, **dadurch gekennzeichnet,**
**dass** die Radachse (3) beidseits über die Räder (4) des Radsatzes (2) hinaus verlängert ist und mit einem Wellenzapfen (5) endet (Radsatz 1. Art) und
**dass** jeder Wellenzapfen (5) in einer Schwungscheibe (9) zentral in einem Lager (30) der Schwungscheibe aufgenommen ist.

3. Resonanzprüfstand nach Anspruch 1, **dadurch gekennzeichnet,**
**dass** die Schwungscheiben (9) der Adaptoren (6) jeweils auf der Radachse (3) zwischen den Rädern (4) gelagert sind (Radsatz 2. Art).

4. Resonanzprüfstand nach Anspruch 1, **dadurch gekennzeichnet,**
**dass** das elastische Lager (30) in der Schwungscheibe (9) in radialer Richtung steif, im übrigen elastisch verformbar ist.

5. Resonanzprüfstand nach Anspruch 4, **dadurch gekennzeichnet,**
**dass** das elastische Lager (30) sowohl in axialer Richtung als auch in Umfangsrichtung elastisch ausgebildet ist.

6. Resonanzprüfstand nach Anspruch 5, **dadurch gekennzeichnet,**
**dass** das elastische Lager (30) aus einzelnen Federspeichen (33) zusammengesetzt ist, deren radial inneren Enden (37) eine kreisförmig geschlossene Lagerschale bilden und deren radial äußeren Enden mit der Schwungscheibe (9) fest verbunden sind.

7. Resonanzprüfstand nach Anspruch 6, **dadurch gekennzeichnet,**
**dass** die äußeren Enden der Federspeichen (33) jeweils eine Verbreiterung (36) in Umfangsrichtung bilden und damit in einer Ringnut der Schwungscheibe (9) mit Abstand voneinander befestigt sind.

8. Resonanzprüfstand nach Anspruch 7, **dadurch gekennzeichnet,**
**dass** die Federspeichen (33) mit ihren Verbreiterungen (36) in einer Ringnut (35) einer Schwungscheibenbohrung mittels eines Keilrings (34) befestigt sind.

9. Resonanzprüfstand nach Anspruch 1, **dadurch gekennzeichnet,**
**dass** die Adaptoren (6) jeweils einen Profilring (31) mit U-Profil-Querschnitt aufweisen, dessen Schenkel (7, 32) einerseits (7) mit einem Rad (4), andererseits (32) mit der Schwungscheibe (9) fest verbunden sind, derart, dass sie die Radialkräfte des jeweils zugeordneten, in Schwingung versetzten Rads (4) über die Schwungscheibe (9) und die Federspeichen (33) auf die Radachse (3) übertragen.

10. Elastisches Lager zur Verprobung der Umlaufbiegung
eines rotatorischen Prüflings auf einem Resonanzprüfstand,
wobei der Prüfling feststehend auf einem Maschinentisch (1) abgestützt ist,
**dadurch gekennzeichnet,**
**dass** das elastische Lager (30) aus einzelnen Federspeichen (33) zusammengesetzt ist, die kreisförmig in einer mit dem Prüfling fest verbundenen Schwungscheibe sitzen,
**dass** die radial inneren Enden (37) der Federspeichen (33) eine kreisförmig geschlossene Lagerschale bilden, in welcher der Prüfling aufgenommen ist, und
**dass** die äußeren Enden der Federspeichen mit Abstand voneinander in der Schwungscheibe befestigt sind, derart, dass durch elastische Verformung der Federspeichen (33) Schwingungskräfte auf den Prüfling übertragen und Mikrobewegungen des schwingenden Prüflings von den Federspeichen (33) aufgenommen werden.

11. Elastisches Lager nach Anspruch 10, **dadurch gekennzeichnet,**
**dass** die Federspeichen (33) in radialer Richtung steif, im übrigen elastisch verformbar sind.

12. Elastisches Lager nach Anspruch 11, **dadurch gekennzeichnet,**
**dass** die Federspeichen (33) begrenzt elastisch sowohl in axialer als auch in Umfangsrichtung ausgebildet und/oder befestigt sind.

13. Elastisches Lager nach Anspruch 10, **dadurch gekennzeichnet,**
**dass** die radial äußeren Enden der Federspeichen (33) in Umfangsrichtung verbreitert ausgebildet und mit ihrer Verbreiterung (36) in der Schwungscheibe befestigt sind.

14. Elastisches Lager nach Anspruch 13, **dadurch gekennzeichnet,**
**dass** die Federspeichen (33) mit ihren Verbreiterungen (36) in einer Ringnut (35) der Schwungscheibe aufgenommen und mit Abstand zueinander befestigt sind, derart, dass sie mit ihren inneren Enden (37) in Umfangsrichtung nahezu aneinander anliegen.
